# FASCICULE DE BREVET EUROPEEN

(11) **EP 2 532 853 B1**
(45) Date de publication et mention de la délivrance du brevet: **20.11.2013**
(21) Numéro de dépôt: 12168659.6
(22) Date de dépôt: 21.05.2012
(51) Int. Cl.: F01N 9/00, F02D 41/02

(54) **Procédé de gestion de la régénération d'un filtre à particules**
Steuerverfahren für die Regeneration eines Partikelfilters
Method for managing the regeneration of a particle filter

(30) Priorité: 10.06.2011 FR 1155133
(43) Date de publication de la demande: 12.12.2012
(73) Titulaire: PEUGEOT CITROËN AUTOMOBILES SA, 78140 Velizy-Villacoublay (FR)
(72) Inventeur: Colignon, Christophe, 95110 Sannois (FR); Faure, Sébastien, 92500 Rueil Malmaison (FR)

(56) Documents cités:
- EP-A1- 1 229 223
- EP-A1- 1 602 807
- EP-A1- 2 107 221
- WO-A1-03/100227
- DE-A1-102004 055 605

## Description

L'invention concerne un procédé de gestion de la régénération d'un filtre à particules.

Un procédé de gestion connu de la régénération d'un filtre à particules, comprend une série de phases de régénération du filtre espacées temporellement les unes des autres, chaque phase de régénération étant initiée par l'atteinte d'une valeur de charge en suie de déclenchement.

Classiquement, afin de régénérer le filtre à particules, le véhicule automobile comprend un système qui permet d'injecter un carburant de telle façon que ce carburant se retrouve dans la ligne d'échappement qui débouche du moteur à combustion interne, et subisse une postcombustion dans un dispositif catalytique d'oxydation qui se trouve dans la ligne d'échappement, en amont du filtre à particules. La température élevée générée par cette postcombustion permet la combustion de la suie dans le filtre et ainsi la régénération de ce dernier. De préférence, ce carburant est injecté dans les cylindres du bloc moteur pendant les temps d'échappement.

Afin de ne pas détériorer les organes de la ligne d'échappement se trouvant en aval du lieu de la postcombustion par une surchauffe excessive, le système électronique de gestion contrôle la régénération en agissant sur le débit de carburant injecté pour la postcombustion.

Afin de ne pas augmenter les contraintes thermomécaniques subies par le filtre à particules au fur et à mesure qu'il s'encrasse, la stratégie de régénération est basée sur une valeur de charge en suie de déclenchement constante (typiquement exprimée en grammes de suie par litre de filtre disponible pour le stockage des particules).

Or, il s'avère que, plus le filtre à particules s'encrasse en résidus et cendres, de natures différentes des suies, et plus il a été régénéré, d'une part, moins la température maximale atteinte par le filtre pendant les phases de régénération est élevée, et, d'autre part, plus la fréquence de régénération augmente. Etant donné que la température maximale atteinte par le filtre pendant les phases de régénération tend à diminuer avec le nombre de phases de régénération, les contraintes subies par le filtre lors des phases de régénération tendent également à diminuer. De plus, étant donné que la fréquence de régénération tend à augmenter avec le nombre de phases de régénération, la consommation de carburant pour la postcombustion tend également à augmenter, ainsi que, dans le cas où un additif d'aide à la régénération est utilisé la consommation de cet additif, et dans le cas où le carburant pour la postcombustion est injecté dans le moteur, plus le taux de dilution du carburant dans l'huile est important.

EP1602807, divulgue un procédé de régénération et de surveillance d'un filtre à particules. Chaque régénération est déclenchée lorsque un seuil de contrepression au sein du filtre est atteint, ce seuil définissant une valeur de charge du filtre étant corrigé en fonction du nombre de régénérations réalisées. Aussi on augmente graduellement la contrepression afin de s'assurer que le filtre à particules n'est pas fendu (ce qui se traduit par une faible montée de la contrepression malgré un fort chargement en particule).

L'invention vise à résoudre un ou plusieurs de ces inconvénients.

L'invention porte ainsi sur un procédé de gestion de la régénération d'un filtre à particules, comprenant une série de phases de régénération du filtre espacées temporellement les unes des autres, chaque phase de régénération étant initiée par l'atteinte d'une valeur de charge en suie de déclenchement, **caractérisé en ce que** la valeur de charge en suie de déclenchement est augmentée après un nombre de phases de régénération précédemment subies par le filtre.

En augmentant, après un nombre prédéterminé de phases de régénération, la charge en suie admissible dans le filtre à particules, la température maximale du filtre lors de ces phases gérées selon la présente invention devient plus importante que si la gestion avait été faite selon le procédé de l'art antérieur, et atteint les valeurs des températures maximales du filtre lors de ses premières phases de régénération.

Selon un mode de réalisation particulier, le changement de la valeur de charge en suie de déclenchement est effectué après le franchissement d'un kilométrage réalisé par le véhicule depuis l'installation du filtre.

Selon un autre mode de réalisation, le changement de la valeur de charge en suie de déclenchement est effectué en fonction de l'encrassement du filtre déterminé par le calculateur gérant la régénération du filtre.

Selon un autre mode de réalisation, le changement de la valeur de charge de suie de déclenchement est effectué en continu par l'utilisation d'une cartographie.

Selon un autre aspect, l'invention concerne également un véhicule comprenant un filtre à particules ainsi qu'un système électronique de gestion de la régénération du filtre configuré de façon gérer la régénération conformément au procédé de la présente invention.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma illustrant la température maximale atteinte par le filtre à particules lors des phases de régénération en fonction du kilométrage du véhicule, la régénération étant gérée selon un procédé de l'art antérieur ;
- la figure 2 est un schéma illustrant la charge en suie du filtre à particules lors des phases de régénération en fonction du kilométrage du véhicule, la régénération étant gérée selon un procédé de l'art antérieur avec une valeur de charge en suie de déclenchement égale à 6 g/I ;
- la figure 3 est similaire à la figure 2, la valeur de charge en suie de déclenchement étant égale à 7 g/l ;
- la figure 4 est similaire aux figures 2 et 3, la valeur de charge en suie de déclenchement étant égale à 8 g/l ; et
- la figure 5 est un schéma illustrant la température en amont du filtre à particules, la température moyenne maximale dans le filtre et la température maximale dans le filtre, en fonction du temps (représenté ici par un nombre de cycle de régénération), ces températures étant mesurées, d'une part pendant un procédé de gestion classique, et, d'autre part, pendant un procédé conforme à la présente invention.

Un filtre à particules disposé dans une ligne d'échappement d'un moteur à combustion permet de filtrer les particules métalliques provenant du moteur et de la ligne d'échappement, les cendres provenant de la combustion du carburant, les cendres provenant du lubrifiant du moteur.

Avec le temps, le filtre se charge en particules, qui sont les cendres et résidus évoqués plus haut, et doit être régénéré. Un procédé connu de gestion de la régénération d'un filtre à particules, comprend une série de phases de régénération du filtre espacées temporellement les unes des autres, chaque phase de régénération étant initiée par l'atteinte d'une valeur de charge en suie de déclenchement. Classiquement, afin de régénérer le filtre à particules, le véhicule automobile comprend un système qui permet d'injecter un carburant de sorte que ce carburant puisse subir une postcombustion dans un dispositif catalytique d'oxydation qui se trouve dans la ligne d'échappement, en amont du filtre à particules. La température élevée générée par cette postcombustion permet la combustion de la suie dans le filtre et ainsi la régénération de ce dernier.

Afin de ne pas augmenter les contraintes thermomécaniques subies par le filtre à particules au fur et à mesure qu'il s'encrasse, la stratégie des procédés connus de gestion de régénération est basée sur une valeur de charge en suie de déclenchement constante par rapport au volume de filtration.

De plus, afin de diminuer la température à partir de laquelle la régénération du filtre peut être réalisée ainsi que la quantité de carburant nécessaire pour la régénération, il est classique d'utiliser un additif d'aide à la régénération qui est usuellement mélangé au carburant.

Les résidus de l'additif d'aide à la régénération, les cendres du carburant et les cendres du lubrifiant ne sont pas détruits lors des phases de régénération. Les résidus sont piégés dans le filtre, ils s'y s'accumulent donc continuellement et limitent de plus en plus l'espace disponible du filtre à particules.

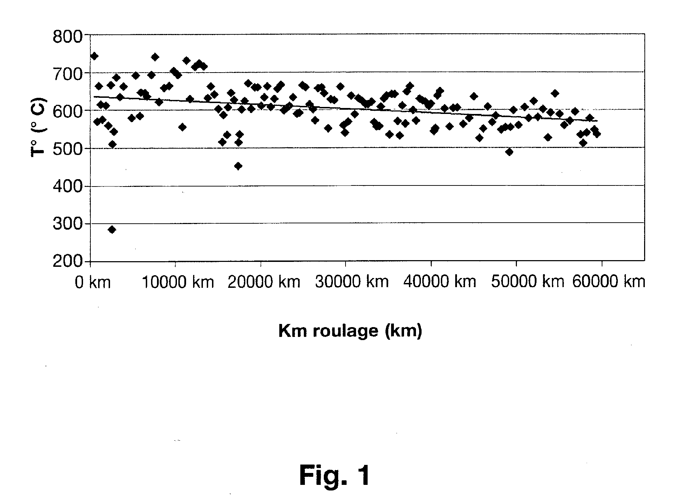

La figure 1 illustre que, plus le filtre à particules a été régénéré, moins la température maximale régnant dans le filtre pendant les phases de régénération est élevée. Une autre conséquence est que la fréquence de régénération augmente, donc que la consommation de carburant pour la postcombustion devient de plus en plus importante, et dans le cas où l'injection du carburant pour la postcombustion se fait dans les cylindres du moteur pendant les temps d'échappement, le taux de dilution du carburant dans l'huile augmente également. Une troisième conséquence est que la quantité de résidus d'additif occupe de plus en plus de place dans le filtre à particules.

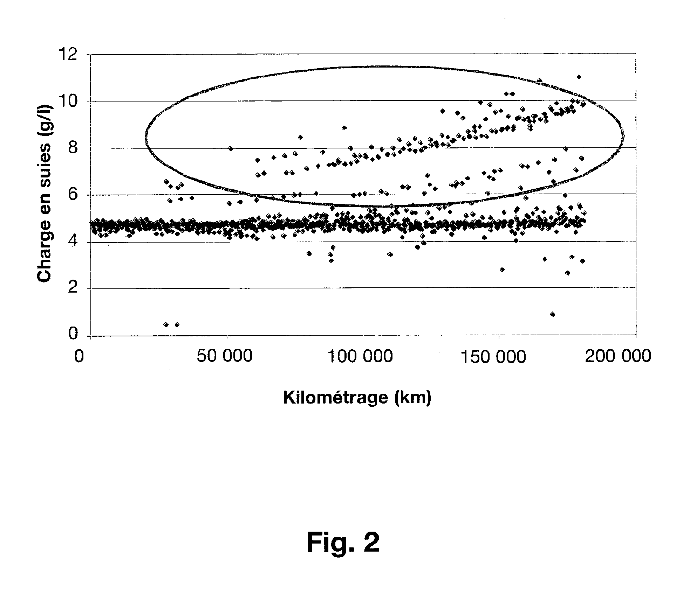

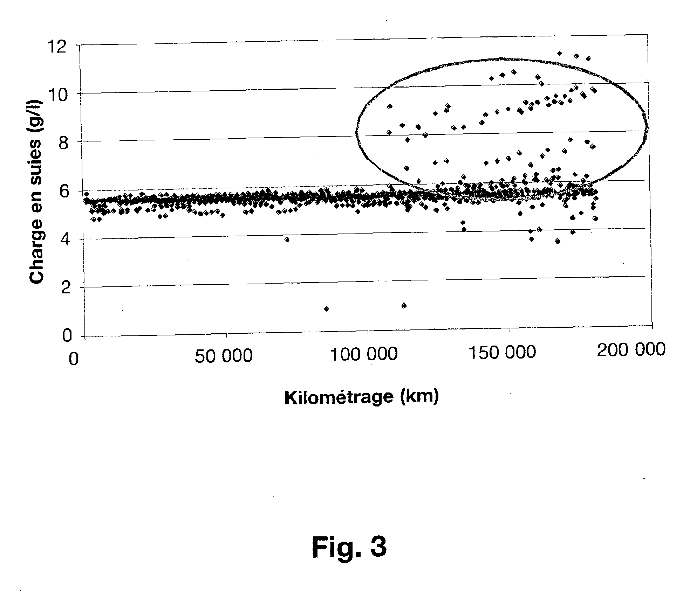

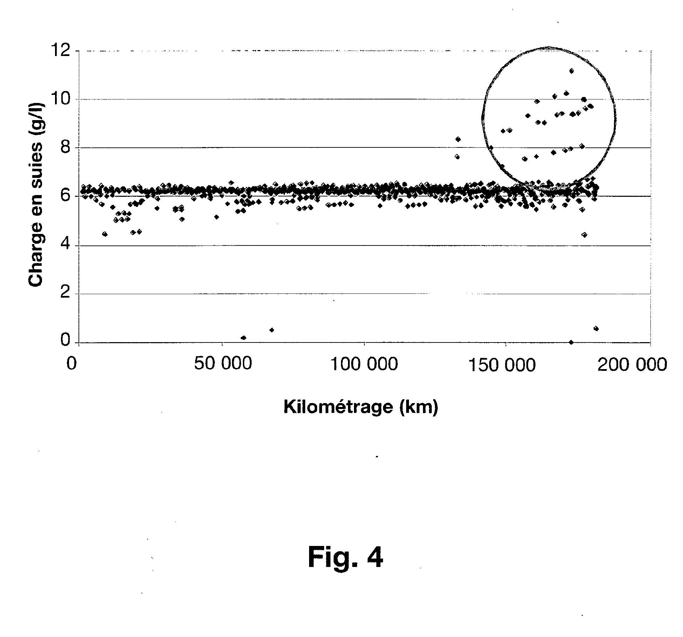

Comme illustré à chacune des figures 2 à 4, les charges en suie du filtre à particules au début des phases de régénération ont tendance, après un certain nombre de régénération (représenté sur les figures par un certain kilométrage), à être plus élevées que la valeur de charge en suie de déclenchement constante et à augmenter de façon régulière. Cette augmentation des charges en suie au début des phases de régénération est due au piégeage des résidus de l'additif. En outre, comme l'illustrent les figures 2 à 4, plus la valeur de charge en suie de déclenchement constante est élevée, plus l'apparition des charges de suie excessives est tardive. Ainsi, avec une valeur de charge en suie de déclenchement constante et égale à 6 g/l, 7 g/l et 8g/l, l'apparition des charges de suie excessive apparaît vers 25.000 km, 110.000 km et 130.000 km, respectivement.

Ainsi, selon l'invention, le procédé de gestion de la régénération d'un filtre à particules comprend une série de phases de régénération du filtre espacées temporellement les unes des autres, chaque phase de régénération étant initiée par l'atteinte d'une valeur de charge en suie de déclenchement qui est augmentée après que le filtre a subi un nombre de phases de régénération.

En augmentant, après un nombre prédéterminé de phases de régénération, la charge de déclenchement, la température maximale du filtre lors de ces régénérations devient plus importante du fait de la quantité plus importante de suies. Les contraintes thermomécaniques du filtre à particules tendent ainsi à devenir constantes. De plus, la température étant plus élevée, la régénération est plus efficace et peut être de durée plus courte. Enfin, en augmentant la valeur de charge en suie de déclenchement après un certain nombre de phases de régénération, la quantité de carburant utilisé pour la postcombustion est réduite, ainsi que la quantité d'additif d'aide à la régénération. De ce fait, les résidus accumulés dans le filtre sont moins importants.

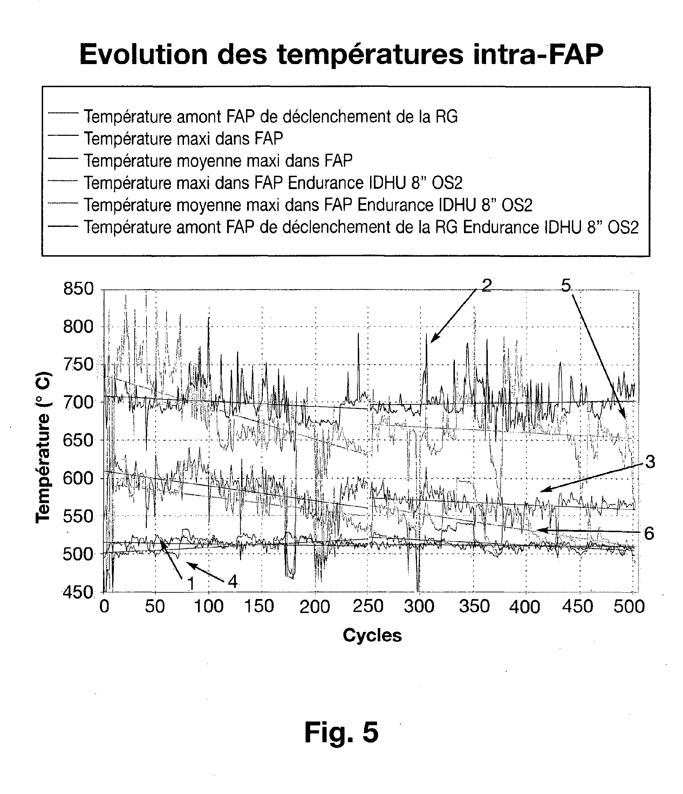

Les courbes 1, 2 et 3 de la figure 5 représentent, respectivement, la température en amont du filtre, la température maximale du filtre et la température moyenne maximale dans le filtre pour une gestion classique de la régénération du filtre. Celles 4, 5 et 6 représentent, respectivement, la température en amont du filtre, la température maximale du filtre et la température moyenne maximale dans le filtre pour une gestion de la régénération du filtre conforme à la présente invention (ici, l'augmentation de la valeur de charge en suie de déclenchement est réalisée après 250 cycles).

Le changement de la valeur de charge en suie de déclenchement peut être effectué après le franchissement d'un kilométrage prédéterminé par le véhicule depuis l'installation du filtre. Il peut être également déterminé en fonction de l'encrassement du filtre calculé par le système électronique de gestion, notamment en fonction de la consommation de carburant, de la consommation d'huile du véhicule, et de la quantité consommée d'additif d'abaissement de la température de combustion des suies.

Il est également possible qu'il y ait plusieurs changements de la valeur de charge en suie de déclenchement. Notamment, le changement de la valeur de charge peut être réalisé en continu par l'utilisation d'une cartographie.

Ainsi la présente invention permet de limiter le taux de carburant dans l'huile du moteur, de limiter la consommation en carburant pour la postcombustion, de limiter l'encrassement du filtre à particules, et de réduire dans la durée les émissions de polluants.

La présente invention peut être utilisée pour tout type de filtre, que ce soit un filtre nu, un filtre catalysé ou un filtre additivé.

L'invention a permis d'identifier le fait que plus le filtre à particules contient de résidus et de cendres, et plus la perte de charge entre l'entrée et la sortie du filtre augmente, ce qui intervient dans le déclenchement de la régénération. L'invention propose alors d'adapter la masse de suie constituant le seuil au-delà duquel la régénération est déclenchée en fonction de l'augmentation de la masse de résidus et cendres qui restent dans le filtre.

## Revendications

1. Procédé de gestion de la régénération d'un filtre à particules, comprenant une série de phases de régénération du filtre espacées temporellement les unes des autres, chaque phase de régénération étant initiée par l'atteinte d'une valeur de charge en suie de déclenchement, **caractérisé en ce que** la valeur de charge en suie de déclenchement est augmentée après un nombre de phases de régénération précédemment subies par le filtre, en fonction de l'augmentation de la masse de résidus et cendres qui ne sont pas détruits lors des phases de régénération et qui restent dans le filtre.

2. Procédé de gestion selon la revendication 1, **caractérisé en ce que** le changement de la valeur de charge en suie de déclenchement est effectué après le franchissement d'un kilométrage réalisé par le véhicule depuis l'installation du filtre.

3. Procédé de gestion selon l'une des revendications 1 et 2, **caractérisé en ce que** le changement de la valeur de charge en suie de déclenchement est effectué en fonction de l'encrassement du filtre déterminé par le calculateur gérant la régénération du filtre.

4. Procédé selon l'une des revendications 1 à 3, **caractérisé en ce que** le changement de la valeur de charge en suie de déclenchement est effectué en continu par l'utilisation d'une cartographie.

5. Véhicule automobile comportant un filtre à particules et un système électronique de gestion de la régénération d'un filtre à particules configuré de façon à permettre l'initiation d'une série de phases de régénération du filtre espacées temporellement les unes des autres, chaque phase de régénération étant initiée par l'atteinte d'une valeur de charge en suie de déclenchement, **caractérisé en ce que** le système électronique est configurée de façon à augmenter la valeur de charge en suie de déclenchement après avoir déclenché un nombre de phases de régénération du filtre.

## Patentansprüche

1. Verfahren zum Steuern der Regeneration eines Partikelfilters, umfassend eine Reihe von Regenerationsphasen des Filters, die jeweils zeitlich voneinander getrennt sind, wobei jede Regenerationsphase durch das Erreichen eines Rußbelastungsauslösewertes initiiert wird, **dadurch gekennzeichnet, dass** der Rußbelastungsauslösewert nach einer Anzahl an zuvor vom Filter durchlaufenen Regenerationsphasen in Abhängigkeit davon erhöht wird, wie das Gewicht an Rückständen und Aschen angestiegen ist, die während der Regenerationsphasen nicht zerstört werden, und im Filter verbleiben.

2. Steuerungsverfahren nach Anspruch 1, **dadurch gekennzeichnet, dass** die Änderung des Rußbelastungsauslösewertes nach dem Überschreiten einer Kilometerleistung ausgeführt wird, die vom Fahrzeug seit dem Einbau des Filters erbracht worden ist.

3. Steuerungsverfahren nach einem der Ansprüche 1 und 2, **dadurch gekennzeichnet, dass** die Änderung des Rußbelastungsauslösewertes in Abhängigkeit von der Verschmutzung des Filters ausgeführt wird, die vom Rechner bestimmt wird, der die Regeneration des Filters steuert.

4. Steuerungsverfahren nach einem der Ansprüche 1 bis 3, **dadurch gekennzeichnet, dass** die Änderung des Rußbelastungsauslösewertes ununterbrochen durch die Verwendung einer Kartografie ausgeführt wird.

5. Kraftfahrzeug umfassend einen Partikelfilter und ein elektronisches System zum Steuern der Regeneration eines Partikelfilters, das konfiguriert ist, um die Initiierung einer Reihe von Regenerationsphasen des Filters zu ermöglichen, die jeweils zeitlich voneinander getrennt sind, wobei jede Regenerationsphase durch das Erreichen eines Rußbelastungsauslösewertes initiiert wird, **dadurch gekennzeichnet, dass** das elektronische System konfiguriert ist, um den Rußbelastungsauslösewert zu erhöhen, nachdem eine Anzahl an Regenerationsphasen des Filters ausgelöst worden ist.

## Claims

1. Method for managing the regeneration of a particle filter, comprising a series of filter regeneration phases temporally spaced from one another, where each regeneration phase is initiated when a releasing soot load value is reached, **characterised in that** the releasing soot load value is increased after a number of regeneration phases previously subjected by the filter, according to the increase of the mass of residue and ash which is not destroyed during regeneration phases and which remains in the filter.

2. Method for managing according to claim 1, **characterised in that** the change of the releasing soot load value is carried out after travelling a mileage by the vehicle from installation of the filter.

3. Method for managing according to one of claims 1 and 2, **characterised in that** the change of the releasing soot load value is carried out according to the clogging of the filter determined by the calculator that manages the regeneration of the filter.

4. Method according to one of claims 1 to 3, **characterised in that** the change of the releasing soot load value is carried out continuously through the use of a map.

5. Motor vehicle comprising a particle filter and an electronic system for managing the regeneration of a particle filter configured in such a way as to allow for the initiation of a series of filter regeneration phases temporally spaced from one another, where each regeneration phase is initiated when a releasing soot load value is reached, **characterised in that** the electronic system is configured in such a way as to increase the releasing soot load value after having triggered a number of filter regeneration phases.
